Europäisches Patentamt

European Patent Office

Office européen des brevets

(11) Publication number: **0 500 053 A2**

# EUROPEAN PATENT APPLICATION

(21) Application number: **92102692.8**

(22) Date of filing: **18.02.92**

(51) Int. Cl.5: **H02K 53/00**

(30) Priority: **22.02.91 JP 28371/91**

(43) Date of publication of application:
**26.08.92 Bulletin 92/35**

(84) Designated Contracting States:
**DE FR GB IT**

(71) Applicant: **Kanazawa, Yukio**
**880, Sekishi-cho**
**Hamamatsu-shi, Shizuoka, 431-31(JP)**

(72) Inventor: **Kanazawa, Yukio**
**880, Sekishi-cho**
**Hamamatsu-shi, Shizuoka, 431-31(JP)**

(74) Representative: **Schwan, Gerhard, Dipl.-Ing.**
**Elfenstrasse 32**
**W-8000 München 83(DE)**

(54) **Prime mover.**

(57) The object of the present invention is to provide a prime mover by which rotary force can be obtained only with magnetic actions of a magnet. The first rotary body provided with the second magnetic body can be driven and rotated as the second magnetic body is attracted by the first magnetic body attached to the inner circumferential face of the body base which is in a stationary state. And When the second magnetic body passes through a position confronted to the first magnetic body, the second magnetic body is covered up with the magnetic control member on the second rotary body which is driven and rotated under such a condition as the speed thereof is accelerated for the first rotary body by the first rotary body. As a result, the magnetic action of the first magnetic body is not exerted on the second magnetic body.

The above state is repeated by turns at each of the portions divided in the axial core direction of the prime mover, thereby causing the rotation of the prime mover to be maintained.

Fig. 1

## BACKGROUND OF THE INVENTION

### Field of the invention

This invention relates to a prime mover in which rotary force can be secured with the magnetic action of a magnet.

### Description of the Prior Art

For instance, in an electric motor which is a kind of the prime movers, electric energy is converted to mechanical rotary motion energy by utilizing the force generated by the action between a current flowing conductor and the magnetic field thereof, thereby causing the rotary force to be secured.

Namely, in order to maintain the condition of revolution, it is requisite to keep an electric current on being flown at all times.

## SUMMARY OF THE INVENTION

It is, therefore, an object of the invention to provide a prime mover by which a rotary force can be secured only with the magnetic action of a magnet, for example, without supplying an electric power as shown in the above.

In order to achieve the above object, the main means which is employed by the invention comprises, in the gist thereof, a cylindrical body base, a plurality of first magnetic bodies arranged on the cylindrical body base with an appointed pitch, a first rotary body rotatably supported on the cylindrical body base, a plurality of second magnetic bodies arranged with an appointed pitch at a position on the first rotary body confronted with a plurality of the first magnetic bodies and magnetized in the same polarity of the first magnetic bodies or relatively for the first magnetic bodies, a second rotary body rotatably supported coaxially with the first rotary body and so connected to the first rotary body that the second rotary body can rotate at an appointed speed change ratio for the first rotary body, and a plurality of magnetic control members arranged with an appointed pitch in the space formed between a plurality of the first magnetic bodies and a plurality of the second magnetic bodies and supported by the second rotary body, and is characterized in that a plurality of the magnetic control members, a plurality of the first magnetic bodies and a plurality of the second magnetic bodies are relatively divided into a plurality of rows in the axial direction of the cylindrical body base, corresponding to each other and a plurality of the first and the second magnetic bodies are caused to be individually slid in the circumferential direction so that a plurality of the first and the second magnetic bodies can be individually stretched on the circumference relatively for a plurality of the magnetic control members when being observed from the side thereof.

Furthermore, in order to achieve the above object, the main means which is employed by the invention comprises, in the gist thereof, a cylindrical body base, a plurality of first magnetic bodies arranged on the cylindrical body base with an appointed pitch, a first rotary body rotatably supported on the cylindrical body base, a plurality of second magnetic bodies arranged with an appointed pitch at a position on the first rotary body confronted with a plurality of the first magnetic bodies and magnetized in the same polarity of the first magnetic bodies or relatively for the first magnetic bodies, a second rotary body rotatably supported coaxially with the first rotary body, a sun-and-planet gear mechanism intervened between the first rotary body and the second rotary body so that the second rotary body can rotate at an appointed speed change ratio for the first rotary body, and a plurality of magnetic control members arranged with an appointed pitch in the space formed between a plurality of the first magnetic bodies and a plurality of the second magnetic bodies and supported by the second rotary body, and is characterized in that a plurality of the magnetic control members, a plurality of the first magnetic bodies and a plurality of the second magnetic bodies are relatively divided into a plurality of rows in the axial direction of the cylindrical body base, corresponding to each other and a plurality of the first and the second magnetic bodies are caused to be individually slid in the circumferential direction so that a plurality of the first and the second magnetic bodies can be individually stretched on the circumference relatively for a plurality of the magnetic control members when being observed from the side thereof.

The above second prime mover is so constructed that the above sun-and-planet gear mechanism may be provided with a speed change mechanism which can change the speed of rotation of the first and the second rotary body by adequately sliding the phase of the above magnetic control members for the first magnetic bodies and adjusting the degree of magnetic action between the first and the second magnetic bodies.

Also, in the case that a substance relatively magnetized for the first magnetic bodies is used as the second magnetic bodies, it is good that iron which is one of the ferromagnetic bodies is used as the first magnetic bodies.

On the other hand, in the case that a substance relatively magnetized for the second magnetic bodies is used as the first magnetic bodies, it is good that iron is used as the second magnetic bodies, contrarily to the above case.

Furthermore, It is also good that a substance magnetized to the same polarity as for the first and the second magnetic bodies is used.

Furthermore, a magnetic shielding substance (for instance, nickel alloy) or iron , etc. which can shield the magnetism of, for example, the magnetized first magnetic bodies and second magnetic bodies may be used as the magnetic control members.

In a prime mover according to the invention, in the case that for example a magnetized substance is used as the first magnetic bodies and iron is used as the second magnetic bodies and the magnetic control members, one of the second magnetic bodies on the first rotary body is attracted by one of the first magnetic bodies on the cylindrical body base to cause the corresponding first rotary body to rotate in an appointed direction. As one of the second magnetic bodies approaches one of the first magnetic bodies, one of the magnetic control members shifts in such a direction as the magnetic action between one of the first magnetic bodies and one of the second magnetic bodies can be shielded. As one of the second magnetic bodies reaches the position confronted with one of the first magnetic bodies, the magnetic attraction force at this time can be shielded by one of the magnetic control members.

Thereafter, the other second magnetic bodies on the first rotary body begins being attracted by one of the first magnetic bodies, the first rotary body further rotates in an appointed direction.

Such a state as shown in the above description is repeated alternately at each of the rows, thereby causing the condition of revolution of the first rotary body in an appointed direction to be maintained by action of magnetic attraction.

Even in the case that iron is used as the first magnetic bodies and a magnetized substance is used as the second magnetic bodies respectively, the condition of revolution of the first rotary body in an appointed direction can be maintained by action of the magnetic attraction force as well as in the above case.

Also, in a prime mover according to the invention, in the case that a substance commonly magnetized to the same polarity is used as the first and the second magnetic bodies, the first rotary body rotates in an appointed direction by action of magnetic repulsion between the first magnetic bodies and the second magnetic bodies, thereby causing the condition of revolution to be maintained.

Furthermore, in the above cases, the phase of the above magnetic control members for the first magnetic bodies is adequately caused to slide by operating the speed change mechanism, thereby causing the degree of the magnetic action between the first and the second magnetic bodies to be adjusted and causing the revolution speed of the first and the second rotary bodies to be changed.

As the prime mover according to the present invention is so composed as described above, rotary force can be secured only by magnetic action of a magnet without supplying any electric power to, for example, an electric motor.

## BRIEF DESCRIPTION OF THE DRAWINGS

Fig. 1 shows the structure of a prime mover according to an example of the embodiments of the invention and is a front elevation view thereof with one side cover removed,
Fig. 2 is a side elevation view of the prime mover,
Fig. 3 is an end elevation view taken along with the line A-A' in Fig. 1,
Fig. 4 is an end elevation view taken along with the line B-B' in Fig. 1,
Fig. 5 is an end elevation view taken along with the line C-C' in Fig. 1,
Fig. 6 is an end elevation view taken along with the line D-D' in Fig. 1,
Fig.7 is an end elevation view taken along with the line E-E' in Fig. 1,
Fig. 8 is an end elevation view taken along with the line F-F' in Fig. 1, and
Fig. 9 is an explanation view of the relationship of the first magnetic bodies, the second magnetic bodies and the magnetic control members which constitute the above prime mover.

## DETAILED DESCRIPTION OF THE PREFERRED EMBODIMENTS

With reference to the drawings attached herewith, the preferred embodiment of the invention is explained for more understanding the invention. The ensuing embodiment is one of the preferred embodiments in which the invention is embodied and it does not intend to limit the technical scope thereof.

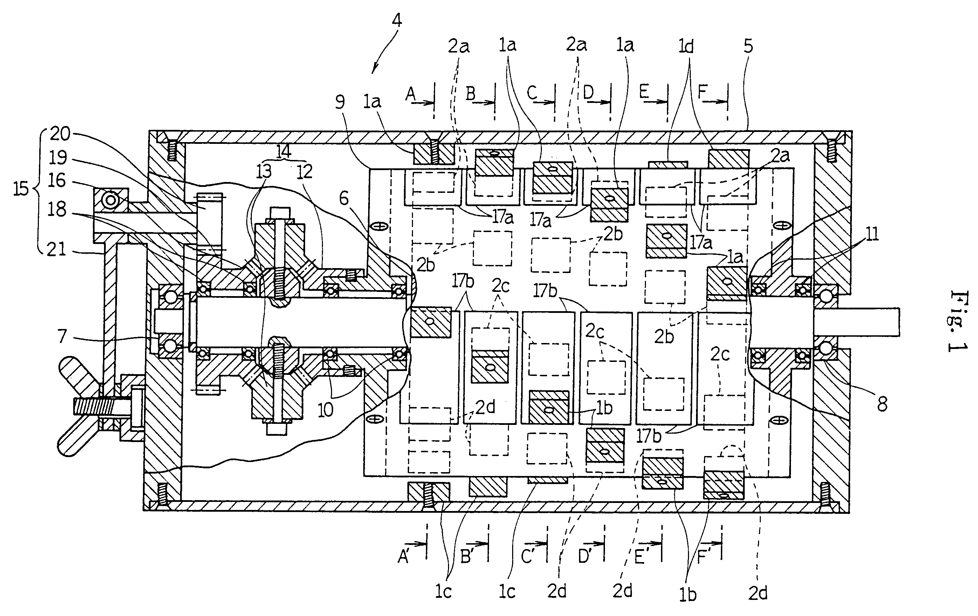

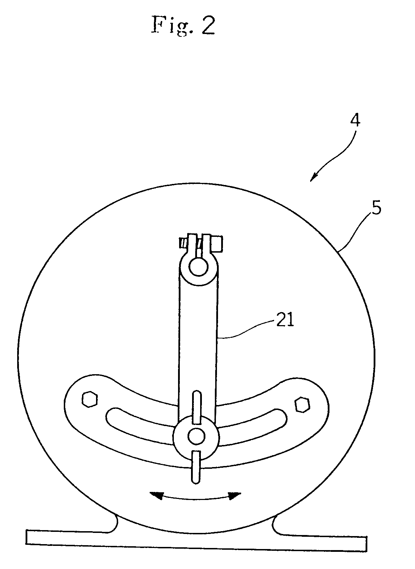

In a prime mover 4 according to the invention, four first magnetic bodies 1a through 1d of the same polarity (for example, "N" pole), which are observed on the side section view, are arranged with equal pitch in the circumferential direction on the inner periphery of the cylindrical body base 5 as shown in Fig. 1 through Fig. 9.

A column-like rotor 6 (first rotary body) is arranged in the cylindrical body base 5 coaxially therewith. The rotor 6 is rotatably supported on the cylindrical body base 5 by means of bearings 7 and 8.

Eight second magnetic bodies 2a through 2h made, for instance, of an iron member are arranged with equal pitch in the circumferential direction at the position confronted with the first magnetic bodies 1a through 1d on the cylindrical body base 5.

The width dimension of the first magnetic bodies 1a through 1d in the circumferential direction thereof is roughly equal to that of the second magnetic bodies 2a through 2h in the circumferential direction thereof, and the ratio of the quantity thereof is one to two.

A control rotor 9 (the second rotary body) is arranged coaxially with the cylindrical body base 5 and the rotor 6 therebetween. The control rotor 9 is rotatably supported on the rotor 6 by means of bearings 10, 10, 11 and 11.

The control rotor 9 is made, for example, of such a thin synthetic resin as polypropyrene which can sufficiently penetrate the magnetism without being magnetized.

Furthermore, the control rotor 9 is connected through the sun-and-planet gear mechanism 14 consisting of a sun gear 12 and planet gears 13, 13 to the rotor 6, so that it can rotate at the speed change ratio (speed increment ratio) of two to one (2:1) for the rotor 6.

In this case, it is possible to use a transmission mechanism comprising a spur gear train, or a timing pulley and a timing belt, by which two to one speed change ratio can be secured, instead of the sun-and-planet gear mechanism 14 as shown above.

Furthermore, the prime mover 4 according to the present invention, as described above, is so composed that the rotor 6 can rotate by way of the magnetic action between the first magnetic bodies 1a through 1d and the second magnetic bodies 2a through 2b. However, in order for the rotation speed of the rotor 6 to be changed, the sun-and-planet gear mechanism 14 is provided with a speed change mechanism 15 in the prime mover 4.

The sun gear 16 which engages with the planet gears 13, 13 is rotatably supported by bearings 18, 18 on the axis of the rotor 6 in the speed change mechanism 15, and the sun gear 16 is connected to the lever 21 fixed on the axis of the spur gear 20 by way of spur gears 19 and 20. The lever 21 is swingable on the axis center of the spur gear 20, and the phase of the magnetic control members 17a through 17d, described later, on the control rotor 9 for the first magnetic bodies 1a through 1d on the body base 5 is caused to slide by swinging driving the lever 21, thereby causing the degree of the magnetic action between the first magnetic bodies 1a through 1d and the second magnetic bodies 2a through 2h to be adjusted, and the revolution speed of the rotor 6 and the control rotor 9 can be changed.

Furthermore, in this case, it is needless to say in the prime mover according to the present invention that such a speed change mechanism 15 as described above can be omitted and the rotors can be designed to rotate at a constant speed.

In a space formed between the first magnetic bodies 1a through 1d and the second magnetic bodies 2a through 2h, for example, four magnetic control members 17a through 17d are arranged with equal pitch in the circumferential direction, and these magnetic control members 17a through 17d are supported by the control rotor 9.

The magnetic control members 17a through 17d are formed of, for example, iron material, and they can act not to permeate magnetism. Besides, in this case, as the magnetic bodies 17a through 17d are attracted with uniform magnetism from the circumference thereof by the first magnetic bodies 1 a through 1d, the power balance thereof is balanced, thereby causing the state of rotation to be stabilized.

And respective width dimension of the magnetic control members 17a through 17d in the circumferential direction is set to a value of roughly four point five times each width dimension of the first magnetic bodies 1a through 1d in the circumferential direction.

Furthermore, in the prime mover 4 according to the present invention, the magnetic control members 17a through 17d, the first magnetic bodies 1a through 1d and the second magnetic bodies 2a through 2h are divided into, for example, six rows corresponding to each other for the axial core direction of the body base 5. Furthermore, when viewed from the side thereof, the first magnetic bodies 1a through 1d and the second magnetic bodies 2a through 2h are individually made to have slid in the circumferential direction so that they can be individually stretched on the circumference.

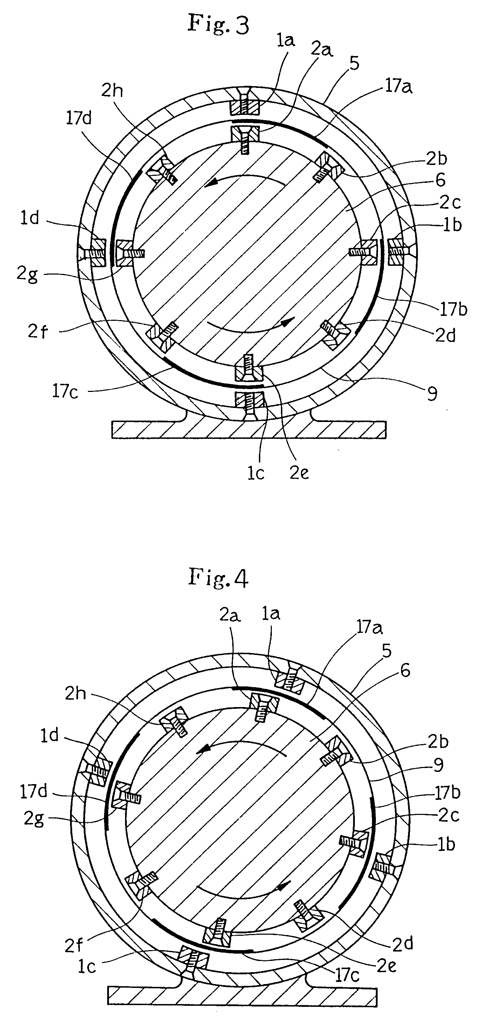

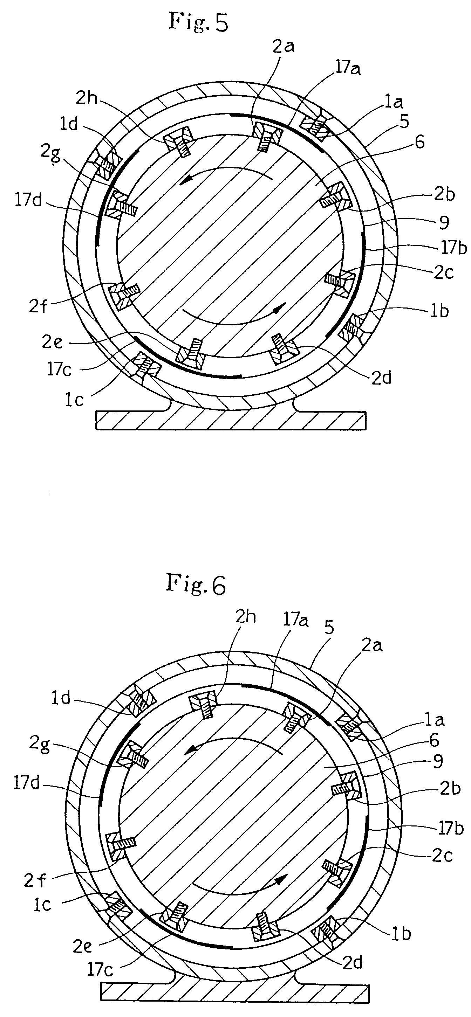

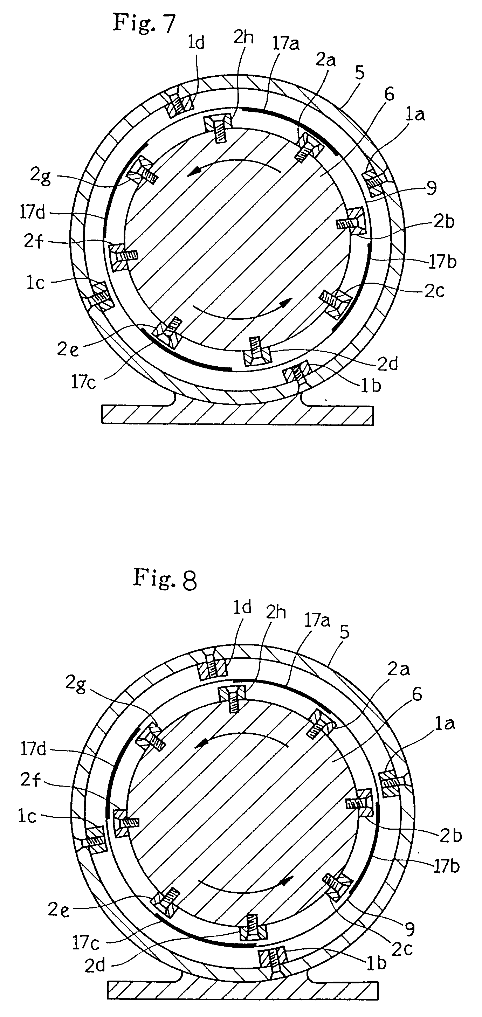

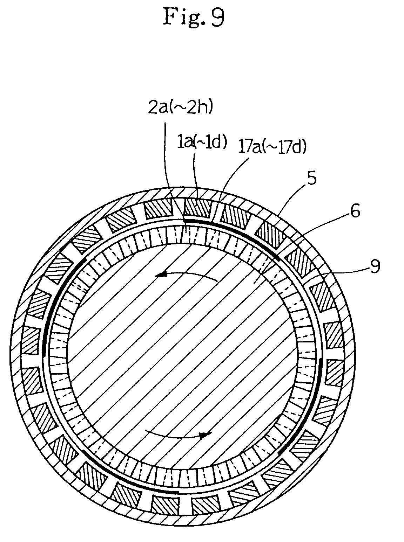

In this case, the relative relationship among the first magnetic bodies 1a through 1d on the base 5, the magnetic control members 17a through 17d on the control rotor 9 and the second magnetic bodies 2a through 2h on the rotor 6 is just under such a state as shown in Fig. 3, in connection with the first row in Fig. 1 (the left row of the same Figure), and is under such a state as shown in Fig. 4 in connection with the second row. Furthermore, the relationship thereof is under such a state as shown in Fig. 5 in connection with the third row, and is under such a state as shown in Fig. 6 in connection with the fourth row. Furthermore, the relationship thereof is under such a state as shown in Fig. 7 in connection with the fifth row, and is under such a state as shown in Fig. 8 in connection with the sixth row. And the situation when viewed from the side thereof with these members overlapped is shown in Fig. 9.

Therefore, the first magnetic bodies 1a through 1d for six rows are stretched so as to be covered by the circumference once in the circumferential direction when viewed from the side, for the magnetic control members 17a through 17d, and the second magnetic bodies 2a through 2d for six rows are stretched so as to be covered by the circumference two times in the circumferential direction, for the magnetic control members 17a through 17d. The prime mover 4 according to the present invention is composed as shown in the above description.

Consecutively, the actions of the prime mover 4 is described below;

For example, the second magnetic body 2a on the rotor 6, for example in the first, the second, the third and the fourth row, is covered up by the magnetic control member 17a on the control rotor 9 for the first magnetic body 1a on the body base 5 and is under such a state as the magnetic action is shielded. Hence, for example the magnetic body 2b on the rotor 6 for example in the fourth, the fifth and the sixth row is attracted by the first magnetic body 1a on the body base 5, thereby causing the rotor 6 to be rotated in the counterclockwise direction.

As the rotor 6 is rotated, the control rotor 9 is driven and rotated at the speed of two times in the counterclockwise direction as well.

Therefore, as the second magnetic body 2b is approaching the first magnetic body 1a, the magnetic control member 17b in the same row rapidly approaches toward between the second magnetic body 2b and the first magnetic body 1a. And finally, the magnetic control member 17b goes between the second magnetic body 2b and the first magnetic body 1a, and while the magnetic control member 17b under this state is passing through the position confronting to the first magnetic body 1a, the second magnetic body 2b passes through the position confronting to the first magnetic body 1a. This state corresponds to the relationship among the first magnetic body 1a, the second magnetic body 2a and the magnetic control member 17a in the first, the second, the third and the fourth row, which has been described above.

This truly expresses the time-elapsing changes pertaining to the actions of the second magnetic body 2a and the magnetic control member 17a for the first magnetic body 1a.

As the state described above is repeated by turn in each of the rows, the revolution of the rotor 6 can be maintained.

Therefore, in the prime mover 4, rotary force can be obtained only by magnetic action of a magnet without supplying electric power for example in the case of an electric motor.

And by adequately swinging the lever 21 of the speed change mechanism 15, the phase of the magnetic control member 17a through 17d for the first magnetic bodies 1a through 1d is caused to be slid, thereby causing it to be slid the timing at which the first magnetic body 1a through 1d is covered up by the magnetic control members 17a through 17b. As a result, the degree of the magnetic action between the first magnetic bodies 1a through 1d and the second magnetic bodies 2a through 2h can be adjusted, thereby causing the rotation speed of the rotor 6 to be changed.

Furthermore, in the prime mover 4 according to the embodiment of the invention, it is possible to change the polarity of the first magnetic bodies 1a through 1d from "N" polarity to "S" polarity and to compose the first magnetic bodies 1a through 1d of an iron member or to compose the second magnetic bodies 2a through 2h of a substance magnetized to the same polarity, respectively.

Besides, it is possible to compose all of the first magnetic bodies 1a through 1d and the second magnetic bodies 2a through 2h of a substance magnetized to the same polarity.

In this case, contrarily to the above case, the rotor 6 rotates by action of magnetic repulsion between the first magnetic bodies 1a through 1d and the second magnetic bodies 2a through 2h, and the rotary state can be maintained.

Also, the prime mover 4 according to the embodiment of the invention is so composed that the magnetic control members 17a through 17d can be relatively divided into six rows for the axial direction of the cylindrical body base 5 for the first magnetic bodies 1a through 1d and the second magnetic bodies 2a through 2h and the magnetic control members 17a through 17d can slide in the circumferential direction so as to stretch on the circumference when viewed from the side thereof.

Furthermore, a magnetic shielding substance composed of for example a nickel alloy may be used as the magnetic control member 17a through 17d.

Also furthermore, it is possible to compose the prime mover according to the invention by properly changing each quantity of the first magnetic bodies 1a through 1d, the second magnetic bodies 2a through 2h and the magnetic control members 17a through 17d, the thickness dimension in the circumferential direction thereof, the number of divisions for the axial direction of the cylindrical body base 5, and the speed change ratio of the control rotor 9 for the rotor 6.

**Claims**

1. A prime mover comprising:-
    a cylindrical body base,
        a plurality of first magnetic bodies arranged on the cylindrical body base with an appointed pitch,

a first rotary body rotatably supported on the cylindrical body base,

a plurality of second magnetic bodies arranged with an appointed pitch at a position on the first rotary body confronted to a plurality of the first magnetic bodies and relatively magnetized for the first magnetic bodies,

a second rotary body rotatably supported coaxially with the first rotary body and so connected to the first rotary body that the second rotary body can rotate at an appointed speed change ratio for the first rotary body, and

a plurality of magnetic control members arranged with an appointed pitch in the space formed between a plurality of the first magnetic bodies and a plurality of the second magnetic bodies and supported by the second rotary body,

and being characterized in that a plurality of the magnetic control members, a plurality of the first magnetic bodies and a plurality of the second magnetic bodies are relatively divided into a plurality of rows in the axial direction of the cylindrical body base, corresponding to each other and a plurality of the first and the second magnetic bodies are caused to be individually slid in the circumferential direction so that a plurality of the first and the second magnetic bodies can be individually stretched on the circumference relatively for a plurality of the magnetic control members when being observed from the side thereof.

2.  A prime mover comprising:-

a cylindrical body base,

a plurality of first magnetic bodies arranged on the cylindrical body base with an appointed pitch,

a first rotary body rotatably supported on the cylindrical body base,

a plurality of second magnetic bodies arranged with an appointed pitch at a position on the first rotary body confronted to a plurality of the first magnetic bodies and relatively magnetized for the first magnetic bodies,

a second rotary body rotatably supported coaxially with the first rotary body,

a sun-and-planet gear mechanism intervened between the first rotary body and the second rotary body so that the second rotary body can rotate at an appointed speed change ratio for the first rotary body, and

a plurality of magnetic control members arranged at an appointed pitch in the space formed between a plurality of the first magnetic bodies and a plurality of the second magnetic bodies and supported by the second rotary body,

and being characterized in that a plurality of the magnetic control members, a plurality of the first magnetic bodies and a plurality of the second magnetic bodies are relatively divided into a plurality of rows in the axial direction of the cylindrical body base, corresponding to each other and a plurality of the first and the second magnetic bodies are caused to be individually slid in the circumferential direction so that a plurality of the first and the second magnetic bodies can be individually stretched on the circumference relatively for a plurality of the magnetic control members when being observed from the side thereof.

3.  A prime mover comprising:-

a cylindrical body base,

a plurality of first magnetic bodies arranged on the cylindrical body base with an appointed pitch,

a first rotary body rotatably supported on the cylindrical body base,

a plurality of second magnetic bodies arranged with an appointed pitch at a position on the first rotary body confronted to a plurality of the first magnetic bodies and magnetized to the same polarity as that of the first magnetic bodies,

a second rotary body rotatably supported coaxially with the first rotary body and so connected to the first rotary body that the second rotary body can rotate at an appointed speed change ratio for the first rotary body, and

a plurality of magnetic control members arranged with an appointed pitch in the space formed between a plurality of the first magnetic bodies and a plurality of the second magnetic bodies and supported by the second rotary body,

and being characterized in that a plurality of the magnetic control members, a plurality of the first magnetic bodies and a plurality of the second magnetic bodies are relatively divided into a plurality of rows in the axial direction of the cylindrical body base, corresponding to each other and a plurality of the first and the second magnetic bodies are caused to be individually slid in the circumferential direction so that a plurality of the first and the second magnetic bodies can be individually stretched on the circumference relatively for a plurality of the magnetic control members when being observed from the side thereof.

4.  A prime mover comprising:-

a cylindrical body base,

a plurality of first magnetic bodies arranged on the cylindrical body base with an appointed pitch,

a first rotary body rotatably supported on the cylindrical body base,

a plurality of second magnetic bodies arranged with an appointed pitch at a position on the first rotary body confronted to a plurality of the first magnetic bodies and magnetized to the same polarity as that of the first magnetic bodies,

a second rotary body rotatably supported coaxially with the first rotary body,

a sun-and-planet gear mechanism intervened between the first rotary body and the second rotary body so that the second rotary body can rotate at an appointed speed change ratio for the first rotary body, and

a plurality of magnetic control members arranged at an appointed pitch in the space formed between a plurality of the first magnetic bodies and a plurality of the second magnetic bodies and supported by the second rotary body,

and being characterized in that a plurality of the magnetic control members, a plurality of the first magnetic bodies and a plurality of the second magnetic bodies are relatively divided into a plurality of rows in the axial direction of the cylindrical body base, corresponding to each other and a plurality of the first and the second magnetic bodies are caused to be individually slid in the circumferential direction so that a plurality of the first and the second magnetic bodies can be individually stretched on the circumference relatively for a plurality of the magnetic control members when being observed from the side thereof.

5. A prime mover claimed in the claim 2, wherein the sun-and-planet gear mechanism is provided with a speed change mechanism which can change the rotation speed of the first rotary body and the second rotary body by adjusting the degree of the magnetic action between the first magnetic bodies and the second magnetic bodies through adequately sliding the phase of the magnetic control members for the first magnetic bodies.

6. A prime mover claimed in the claim 4, wherein the sun-and-planet gear mechanism is provided with a speed change mechanism which can change the rotation speed of the first rotary body and the second rotary body by adjusting the degree of the magnetic action between the first magnetic bodies and the second magnetic bodies through adequately sliding the phase of the magnetic control members for the first magnetic bodies.

7. A prime mover claimed either of the claims 1, 2 or 5, wherein the first magnetic bodies are composed of iron and the second magnetic bodies are composed of such a substance as is relatively magnetized for the first magnetic bodies.

8. A prime mover claimed either of the claims 1, 2 or 5, wherein the second magnetic bodies are composed of iron and the first magnetic bodies are composed of such a substance as is relatively magnetized for the second magnetic bodies.

Fig. 1

Fig. 2

## Fig. 3

## Fig. 4

Fig.5

Fig.6

Fig. 7

Fig. 8

Fig. 9